# EUROPEAN PATENT SPECIFICATION

(11) **EP 2 664 476 B1**
(45) Date of publication and mention of the grant of the patent: **11.10.2017**
(21) Application number: 12167828.8
(22) Date of filing: 14.05.2012
(51) Int. Cl.: B60K 35/00, B60K 37/02, B60K 28/02, G02B 27/00, G08B 21/06, B60R 11/04, B60R 11/00, G02B 27/01

(54) **Instrument cluster arrangement**
Instrumentenclusteranordnung
Agencement de groupe d'instruments

(43) Date of publication of application: 20.11.2013
(73) Proprietor: Volvo Car Corporation, 40 531 Göteborg (SE)
(72) Inventor: Lind, Henrik Olof, 423 39 Torslanda (SE)
(74) Representative: Volvo Car Corporation

(56) References cited:
- WO-A1-2005/021314
- DE-A1- 19 906 706
- US-A1- 2003 201 895
- US-A1- 2009 201 225

## Description

### TECHNICAL FIELD

The present invention relates to an instrument cluster arrangement, being adapted for mounting in a dashboard panel of a vehicle, comprising a display having a display surface providing a graphics area of the instrument cluster arrangement, as known from for instance DE-A-19906706.

### BACKGROUND OF THE INVENTION

In the vehicle industry, there is a trend towards monitoring the behaviour of a subject in the vehicle during a drive, in particular of monitoring the driver. Information regarding the subject may be used for numerous purposes. For example, safety applications might use the information to determine whether the driver is drowsy or otherwise impaired, and may issue a warning if that is the case. Other applications may use information regarding the driver to determine whether the driver is focused on the driving task, or whether he/she is distracted by e.g. events occurring inside the vehicle. The behaviour of the driver may be used in combination with other systems for example for determining which information should be presented to the driver from various in-vehicle applications, and how said information shall be presented. Moreover, information regarding the facial features of the driver may be used to determine who is driving the vehicle, and serve as a basis for automatic setting of personalized features in the vehicle.

In summary, there is a need for monitoring a subject in a vehicle. In particular, there is for some applications a need to monitor the eye movements and/or head position of a driver in a vehicle.
To this end, it has been proposed to use different types of detectors, such as cameras, for retrieving information regarding a subject in a vehicle.
In the past, various locations in the vehicle have been proposed for the arrangement of detectors for monitoring a subject in a vehicle.

US 6 926 429 for example, proposes that a detector is arranged somewhere behind the driver of a vehicle. Radiation (light) is directed from the driver to the detector via a radiation path involving reflection of said radiation in a dedicated area of the windshield, and in two separately arranged reflectors.

Also US 7 091 867 suggests a location for the detector, where a dichroic mirror comprising the windshield of the vehicle is used to reflect the radiation between the driver and the detector.

Often, the detector may conveniently be positioned at a suitable location in the dashboard panel of a vehicle, for example somewhere in the instrument cluster including the major instruments such as speed *indicator*, oil pressure and the like. This location of the detector provides advantages in that the necessary power supply and control signals, as well as the data from the detector, may be transmitted via interfaces situated adjacent the interfaces of the instruments of the instrument cluster. Hence, there will be a dedicated interface area for connection to the instrument cluster, which comprises also the necessary connections to the detector. In other words - no new interface area must be created for handling the detector. Moreover, the mechanical arrangement of the detector in the vehicle may be conveniently made in connection with the arrangement of the other instruments in the dashboard panel. In other words, there is no need to carry out a separate mounting procedure for the detector, such as would be the case if arranging the detector at a more unusual location e.g. in the roof of the vehicle.

Hence, it is desired to provide the detector for monitoring a subject in the vehicle in the instrument cluster arrangement of a vehicle.

However, the development of instrument clusters brings along a desire to use displays, such as LCD displays, for presenting information to the driver, rather than the conventional analogue instruments. Moreover, it is naturally desired to use a relatively large surface of the dashboard for such a LCD display - generally most of the surface conventionally used for the instrument cluster, situated adjacent the steering wheel hub and behind the steering wheel of the vehicle.

Use of such LCD displays implies that the area of the dashboard in which detectors for monitoring the driver has previously been arranged is now covered by the LCD display and no longer available for arrangement of a detector.

Hence, there is a need for a solution enabling use of a detector for monitoring a subject in the vehicle, while having an instrument cluster arrangement comprising a display. Preferably, the solution shall enable that the display may cover a major part of the surface of the dashboard available for the cluster arrangement.

The object of the invention is to provide a solution which enables the fulfillment of at least one, preferably more of the above-mentioned needs.

### SUMMARY OF THE INVENTION

The above-mentioned object is achieved in first aspect of the invention by an instrument cluster arrangement, being adapted for mounting in a dashboard panel of a vehicle, comprising
a display having a display surface providing a graphics area of the instrument cluster arrangement,
a detector for monitoring a subject inside the vehicle, said detector being arranged to receive radiation providing information regarding the subject, and
a reflector arranged to redirect radiation from said subject towards said detector, wherein the detector and the reflector are both arranged in said instrument cluster arrangement, adjacent the display.

By providing both a detector and a reflector in the instrument cluster arrangement, the detector and reflector may be mounted to the dashboard panel of the vehicle together with the instrument cluster arrangement, whereby no additional mounting solutions need to be provided in order to arrange the detector for monitoring a subject inside the vehicle.

The reflector with the purpose of redirecting radiation from the subject to the detector, enables the detector to be positioned at a location and/or with a direction which does not allow direct access to radiation from the subject.

Advantageously, the detector may be arranged next to an outer border of the display surface.

Accordingly, the size of the display surface need not be limited in order for the detector to find a suitable location. Advantageously, the display surface encompasses at least 50%, more preferred at least 75 %, most preferred at least 90% of an outer surface of the cluster arrangement. With the outer surface of the instrument cluster arrangement is meant the surface which will be visible when the instrument cluster arrangement is arranged in the dashboard of a vehicle.

The detector may advantageously be arranged at a location at which the detector, when the instrument cluster arrangement is mounted in the dashboard panel, is at least potentially, preferably constantly, blocked from access to direct radiation from the subject. With "potentially blocked", is meant that the location, during use of the vehicle, may sometimes be blocked from access to direct radiation from the subject, and sometimes not. Typically, such a location could be a location which is sometimes blocked by the steering wheel of the vehicle, and then, when the steering wheel is turned, is not blocked by the steering wheel. Such a location is hence not a reliable location when continued access to radiation from the driver is required. The detector being "constantly blocked" from access to direct radiation means that it is located where there is never access to direct radiation from the driver. Typically, the detector could be constantly blocked by a portion of the steering wheel or by the steering wheel hub.

The detector will have an optical axis, and preferably, the detector is arranged with said optical axis forming an angle with said display surface being in the range -10 to 30 degrees, preferably -10 to 15 degrees, most preferred - 10 to 10 degrees. Accordingly, the optical axis forming an angle with the display surface being 0 will correspond to the optical axis being parallel with the display surface. Negative angles are in this context to be interpreted as being formed when the optical axis is directed towards the display surface, and positive angles are formed when the optical axis is directed in a direction away from the display surface.

Hence, it is understood that the detector is not directed directly towards the subject to be monitored, but in a direction suitable for receiving radiation reflected via the reflector. When the angle to the display surface is relatively small, the reflector may conveniently be positioned relatively close to the detector.

With the term "optical axis" is meant a central direction of the detection. For example, a camera could receive impeding radiation from a number of directions, such that a cone of directions forms a field of view of the camera. With optical axis is meant the centre direction of such a cone, the direction towards which the objective of the camera is directed.

Most preferred is that said detector is arranged with the optical axis being essentially parallel to said display surface.

Preferably, the reflector is arranged between the detector and the display surface. This allows for the reflector being arranged close to the detector. The shorter the distance between the reflector and the detector, the less extension is required by the reflector.

Moreover, it is preferred that, as the display extends between an upper edge and a lower edge, as seen by a subject in the vehicle, said reflector and said detector are arranged adjacent to the lower edge of the display. This location is advantageous in terms of function and of visibility. It is generally required that the detector and the reflector shall be as discreet as possible, not catching the interest of the subject. Instead, the subject (driver) should be able to focus on the instrument information being presented on the display surface.

In other, less preferred embodiments, the reflector may be arranged e.g. on a side of the display surface opposing the detector. In this case, however, the distance between the detector and the reflector is relatively large, and a larger reflector might be necessary. Hence, this embodiment will not be as discreet as the one mentioned above.

Advantageously, the reflector is arranged with a reflective surface forming an angle of at least 100 degrees, preferably between 115 and 155 degrees in relation to the display surface.

Naturally, the angle of the reflector in relation to the display surface should be adapted to the angle of the detector in relation to the display surface, such that the intended redirection of radiation between the subject and the detector is accomplished.

The reflector may advantageously be arranged so as to extend over a margin area of the display surface. With "margin area" of the display surface, is meant an area extending from one of the outer edges of the display surface, towards the centre of the display surface. Hence, the reflector may be arranged at an outer edge of the display surface, and extending obliquely from the outer edge over the display surface. Hence the reflector will be directed such that its reflective surface extends in a direction having a component along the display surface.

Hence, the margin area might be covered by the reflector extending over it.

It is preferred that the reflector is transparent to light in the visible region. Accordingly, even if the reflector extends over a marginal area of the display surface, the entire display surface may be seen by the subject, although partly through the reflector.

Advantageously, the margin area may constitute less than 10%, preferably less than 5% of the total area of the display surface. It is generally desired that the margin area is relatively small, so that any negative influence on the visibility of the display surface, caused by the reflector, is kept at a minimum.

In view of the above, it will be understood that the configuration with the detector and the reflector being arranged on the same edge of the display surface, and with the reflector in between the detector and the display surface, will result in a relatively short distance between the detector and the reflector. This, in turn, means that the reflector may have relatively small dimensions, and the margin area over which the reflector extends is also relatively small. For example, the distance between the detector and the reflector may be in the range 0 to 5 mm.

Advantageously, the reflector may have an extension along a direction being parallel to the display surface being less than 50 mm, preferably less than 10 mm. With extension along a direction parallel to the display surface is meant the component in that direction. The reflector as a whole will extend in a direction forming an angle to said display surface, as mentioned above.

The reflector width must at least be such as required by the size of the optics (field of view, lens opening and reflective angle) and may as most extend to the size of the display width plus possibly side portions extending beyond the display width. Any such side portions should however preferably be relatively small, maximum 30 mm in total.

Advantageously, the reflector extends from a basal end being arranged adjacent to said display area, and a free end opposite said basal end, said free end having an end surface forming an angle of approximately 90 degrees in relation to the display surface. Accordingly, the visibility of the end surface will be diminished, since reflections against the end surface which could possibly disturb the view of the display surface are avoided.

Advantageously, said reflector is a dichroic mirror. The reflector may hence be transparent to visible light, as mentioned above, but reflect radiation corresponding to the functionality of the detector.

Advantageously, the radiation detected could be light outside of the visible region of the spectrum, such as IR radiation.

Advantageously, the instrument cluster could also comprise at least one radiation transmitter being arranged adjacent said display, for transmitting radiation towards the subject. Several types of detectors require a suitable radiation illuminating the subject in order to enable information gathering. By arranging the source of said radiation, the radiation transmitter, in the instrument cluster, further advantages in mounting and construction is achieved, since the entire detection system may be provided in the instrument cluster arrangement.

The radiation transmitter may be arranged to transmit radiation directly towards the subject. With directly towards means that the radiation from the transmitter may immediately reach the subject, not requiring any redirection along the way.

In this case, the radiation transmitter may for example be arranged to transmit radiation in a direction forming an angle of about 45 to 135 degrees to the display surface, more preferred about 60 to 120 degrees, most preferred about 90 degrees to the display surface.

Alternatively, the radiation transmitter may be arranged to transmit radiation towards the reflector, and the reflector redirects the radiation towards the subject. In this case, the radiation transmitter may be arranged to transmit radiation in a direction close to parallel to the optical axis of the detector.

Advantageously, the at least one radiation transmitter is arranged adjacent the detector. This is particularly advantageous when the mirror is to be used for redirecting the radiation from the transmitter.

Advantageously, two radiation transmitters may be arranged in the instrument cluster. The use of two radiation transmitters is sometimes preferred for retrieving information from the subject. For example, certain eye-tracking systems utilize the information from two sources in order to be able to detect the eye movements of the subject. Advantageously, the two radiation transmitters may be arranged on opposite sides of the detector.

Preferably, said radiation transmitter may be designed to provide flashes in a non-visible spectrum, such as IR radiation. Advantageously, the radiation transmitter may be a LED transmitter.

In an advantageous embodiment, the instrument cluster may be provided with an interface for transmitting signals and/or for providing voltage, wherein said interface is connected both to the display and to the detector.

In another advantageous embodiment, said display forms a first unitary module, and said detector and reflector forms a second unitary module, for mounting in a dashboard panel of a vehicle. Preferably, the first unitary module may be adapted such that it may be mounted in the dashboard without the second unitary module, if necessary with a "dummy" second module, not providing any functions. In this case, it will be possible to use the same first unitary module for creating instrument cluster arrangements with or without the subject monitoring features (with or without the true second module). This provides for streamlined manufacture of different vehicle models and for an opportunity to customize the instrument cluster arrangements to individual orders.

Advantageously, said first and second unitary modules may be connectable before mounting thereof in said dashboard panel, so as to enable mounting of the instrument cluster arrangement in the dashboard as one pre-assembled unit.

In a second aspect of the invention, there is provided a vehicle having a dashboard panel comprising an instrument cluster arrangement in accordance with the above.

In particular, there may be provided a vehicle having a dashboard panel comprising an instrument cluster arrangement where the detector is arranged at a location being at least potentially, preferably constantly, blocked from access to direct radiation from the subject by a steering wheel and/or a steering wheel hub of the vehicle.

In a third aspect of the invention, there is provided a method for mounting an instrument cluster arrangement in accordance with the above, comprising mounting said instrument cluster arrangement in the dashboard panel at a location such that radiation providing information regarding the subject in the vehicle may be directed from the subject to the reflector, and redirected by the reflector towards the detector.

Advantageously, the method may comprise mounting said instrument cluster arrangement in the dashboard panel at a location such that the detector is at least potentially, preferably constantly, blocked form access to direct radiation from the subject by a steering wheel and/or a steering wheel hub of the vehicle.

In a fourth aspect of the invention, there is provided the use of an instrument cluster arrangement in accordance with the above for providing information regarding the subject to a subject-monitoring application of the vehicle, in particular to an eye-tracking application.

Further variants of the invention will be understood by the following description of exemplary embodiments thereof, described in relation to the accompanying drawings, wherein:

### BRIEF DESCRIPTION OF THE DRAWINGS

Fig. 1 illustrates schematically a dashboard of a vehicle, wherein an instrument cluster arrangement is to be arranged;
Fig. 2 is a side view of an embodiment of an instrument cluster arrangement in accordance with the invention; and
Fig. 3 is a front view of the instrument cluster arrangement of Fig. 2.

Like reference numerals indicate similar features throughout the drawings.

### DETAILED DESCRIPTION OF PREFERRED EMBODIMENTS

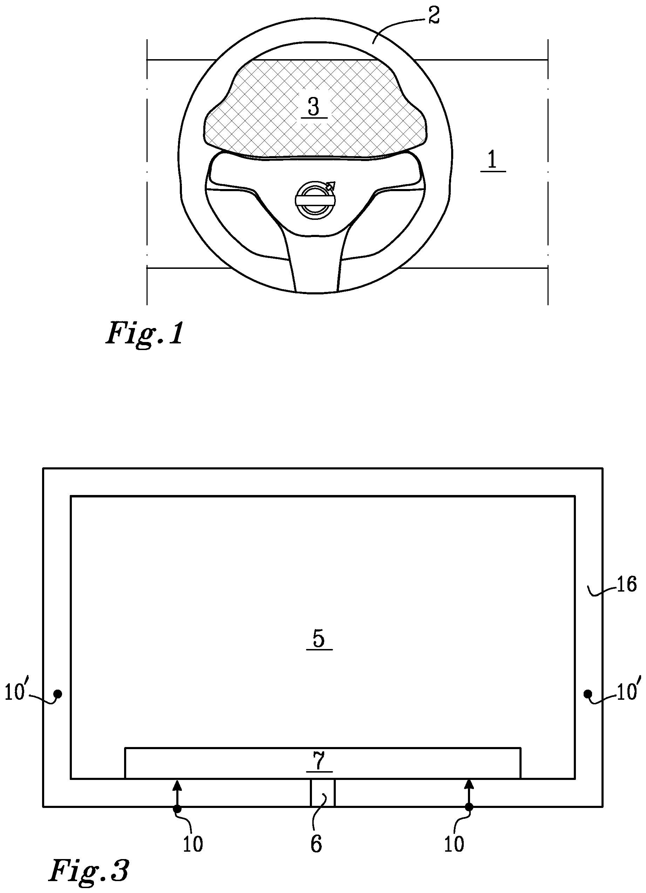

Fig. 1 illustrates schematically the portion of a dashboard panel 1 in a vehicle being in immediate proximity to the steering wheel 2. The portion 3 (striped) of the dashboard panel 1 being visible through the frame formed by the steering wheel (at least when the steering wheel is in a neutral position) is conventionally used for housing the instrument cluster, including the most important instruments to be available to the driver, such as the vehicle speed, engine speed, oil pressure etc.

In conventional instrument cluster arrangements, a number of separate instruments are arranged for presenting various data to the driver.

In more recent arrangements, it is desired to use a display, such as an LCD display, to present the same data to the driver. Naturally, it is desired to use as much as possible of the available visible portion 3 of the dashboard for said display, in order to maximize the display surface available for presenting information.

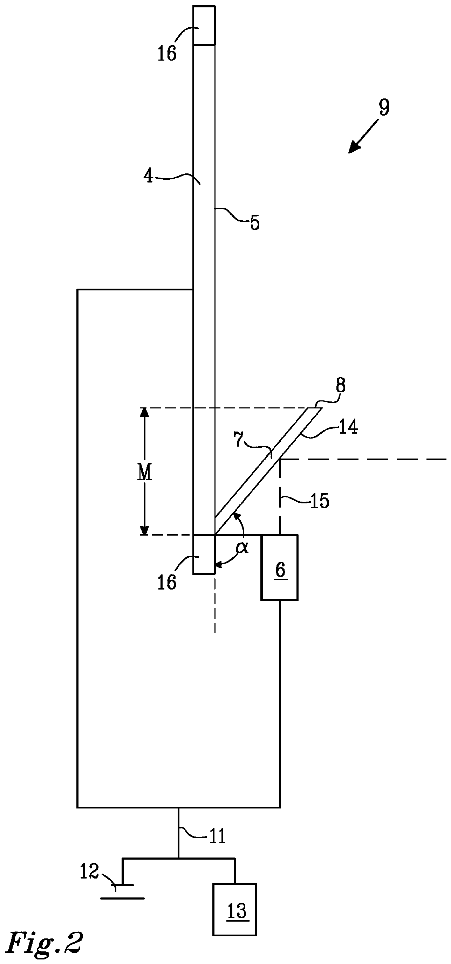

Fig. 2 illustrates schematically an embodiment of an instrument cluster arrangement 9 in accordance with the present invention. The instrument cluster comprises a display 4, having a display surface 5, intended to face the driver when the instrument cluster arrangement is mounted in the dashboard 1 of a vehicle. In the illustrated embodiment, the display is a LCD display. For visibility purposes, in Fig. 2 the size of the detector 6 and the reflector 7 are greatly exaggerated in comparison to the dimensions of the display 4.

A detector 6 for monitoring a subject, in particular the driver, inside the vehicle is arranged to receive radiation providing information regarding the driver, and a reflector 7 is arranged to redirect radiation from said subject towards said detector, as indicated by the dotted line illustrating the path which the radiation will follow between the subject and the detector 6.

In the illustrated embodiment, the detector 6 is located below the lowermost edge of the display surface 5, as seen from a subject. The display surface 5 is intended to extend over the entire vertical dimension of the visible portion 3 of the dashboard. This means that in this embodiment, the location of the detector 6 will be constantly blocked from access to direct radiation from the subject, due to the central region of the steering wheel coming in between the driver and said location.

Accordingly, a detector 6 being directed immediately towards the position of the driver would be unsuccessful in capturing the necessary radiation. Instead, the central region of the steering wheel (and/or the steering wheel hub) would block the radiation from reaching the detector 6.

Nevertheless, in the illustrated embodiment, radiation from the driver may be received by the detector, since the radiation is redirected at the reflector 7. It is understood, that at least a portion of the reflector 7 is positioned at a location which provides immediate access to radiation from the driver. However, since the reflector 7 may be rendered transparent to visible light, this does not hinder use of the entire display surface 5 of the display 4 for presenting information. Accordingly, the visible portion 3 of the dashboard may be efficiently used.

The reflector 7 is preferably a dichroic mirror, being transparent to visible light, but not to the radiation used for detection. Examples of such dichroic mirrors are well-known in the art.

In the illustrated embodiment, the detector 6 is arranged to receive radiation coming from a primary direction being essentially parallel to the display surface 5. The reflector 7 has a reflective surface 14, which forms an angle alfa in relation to the display surface. Angles alfa of at least 100 degrees, preferably between 115 and 155 degrees are believed to be particularly useful for providing a suitable radiation path. In the illustrated embodiment, the angle alfa is about 135 degrees.

The illustrated embodiment is believed to be particularly advantageous, but naturally, other variants are possible.

For example, the reflector 7 could be positioned at the upper edge of the display 4, and hence on the opposite side from the detector 6. However, in this case, the reflector 7 will require relatively large dimensions, since it must enable reflection of the radiation over the display surface 5 towards the detector 6.

Moreover, the angles between e.g. the display and the detector, and the reflector and the detector may be varied.

In the illustrated embodiment, it is seen how the reflector 7 extends from a basal end, at which it is fastened to the instrument cluster arrangement, and a free end. Said free end defines an end surface 8 which herein forms an angle of about 90 degrees with the display surface 5. Accordingly, the end surface 8 will become virtually invisible as seen from a direction of 90 degrees from the display surface.

Moreover, the reflector 7 extends over a margin surface of the display surface 5. This surface is most readily seen in Fig. 3. In Fig. 2, the vertical extension M of the margin surface is indicated.

As may be gleaned from Fig. 3, the illustrated embodiment of an instrument cluster arrangement moreover comprises radiation transmitters 10. In this embodiment, there are two radiation transmitters 10, arranged on horisontally opposing sides of the detector 6. In the illustrated embodiment, the radiation transmitters are LED transmitters.

In the illustrated embodiment, the radiation transmitters 10 are directed to emit radiation in a direction towards the reflector 7, as indicated by the arrows in Fig. 3. From the reflector 7, the radiation will be directed towards the driver so as to enable monitoring thereof. The radiation from both transmitters 10 will be reflected by the driver, back to the reflector 7 and towards the detector 6 which will detect the incoming radiation.

One or more radiation transmitters may be arranged at different locations in the instrument cluster. For example, radiation transmitters could be arranged e.g. at the sides of the display surface 4, as illustrated in Fig. 3 by alternative radiation transmitters 10'.

As schematically illustrated in Fig. 2, the display 4 and the detector 6, optionally also any radiation transmitters 10, could be connected to a common interface 11. Hence, one interface 11 could provide voltage 12 and/or data connection to a processor 13 for all components of the instrument cluster arrangement.

Regardless of how the connection is performed, the detector 6 should be connected to a processor 13 for evaluating the data from the detector 6 in order to monitor the driver. To this end, any known evaluation method may be used. Moreover, the processor 13 may send signals to control the detector 6 and/or the radiation transmitters in order to perform the monitoring of the driver. For example, the processor may control the radiation transmitters so as to be active at certain intervals to send flashes of radiation towards the driver etc.

In view of the above, it will be understood that numerous alternatives and different embodiments of the invention are possible. For example, the geometries of the reflector and the display surface may be adapted to various desires and circumstances.

## Claims

1. Instrument cluster arrangement, being adapted for mounting in a dashboard panel of a vehicle, comprising
a display (4) having a display surface (5) intended to face a subject inside the vehicle when the instrument cluster is arranged in said dashboard panel and providing a graphics area of the instrument cluster arrangement, and **characterised by** a detector (6) for monitoring said subject inside the vehicle, said detector being arranged to receive radiation providing information regarding the subject and a reflector (7) arranged to redirect radiation from said subject towards said detector,
wherein the detector and the reflector are both arranged in said instrument cluster arrangement, adjacent the display.

2. Instrument cluster arrangement in accordance with claim 1, wherein the detector having an optical axis, and said detector being arranged with said optical axis forming an angle with said display surface being in the range -10 to 30 degrees, preferably -10 to 15 degrees, most preferred -10 to 10 degrees.

3. Instrument cluster arrangement in accordance with claim 1 or 2, wherein said detector is arranged with said optical axis being essentially parallel to said display surface.

4. Instrument cluster arrangement in accordance with any of the preceding claims, wherein said reflector is arranged between the detector and the display surface.

5. Instrument cluster arrangement in accordance with any of the preceding claims , wherein said display extends between an upper edge and a lower edge, as seen by a subject in the vehicle, and said reflector and said detector are arranged adjacent to the lower edge of the display.

6. Instrument cluster arrangement in accordance with any of the preceding claims, wherein said reflector is arranged so as to extend over a margin area of the display surface, preferably said margin area constitutes less than 10%, preferably less than 5% of the total area of the display surface.

7. Instrument cluster arrangement in accordance with any of the preceding claims, wherein the reflector extends from a basal end being arranged adjacent to said display area, and a free end opposite said basal end, said free end having an end surface forming an angle of approximately 90 degrees in relation to the display surface.

8. Instrument cluster arrangement in accordance with any of the preceding claims, wherein said reflector is transparent to visible light and reflective to said radiation, preferably said reflector is a dichroic reflector.

9. Instrument cluster arrangement in accordance with any one of the preceding claims, further comprising at least one radiation transmitter being arranged adjacent said display, for transmitting radiation towards the subject, preferably two radiation transmitters are arranged, most preferred two radiation transmitters are arranged on opposite sides of the detector.

10. Instrument cluster arrangement in accordance with claim 9, wherein said at least one radiation transmitter is arranged to transmit radiation in a direction towards the reflector, such that the reflector redirects the radiation towards the subject.

11. Instrument cluster arrangement in accordance with any one of the preceding claims, wherein said instrument cluster is provided with an interface for transmitting signals and/or for providing voltage, wherein said interface is connected both to the display and to the detector.

12. Instrument cluster arrangement in accordance with any one of the preceding claims, wherein said display forms a first unitary module, and said detector and reflector forms a second unitary module, for mounting in a dashboard panel of a vehicle, said first and second unitary modules preferably being connectable before mounting in said dashboard panel, so as to enable mounting of the instrument cluster arrangement in the dashboard as one assembled unit.

13. Vehicle having a dashboard panel comprising an instrument cluster arrangement in accordance with any one of the claims 1-12.

14. Method for mounting an instrument cluster arrangement in accordance with any one of the claims 1-12, comprising mounting said instrument cluster arrangement in the dashboard panel at a location such that radiation providing information regarding the subject in the vehicle may be directed from the subject to the reflector, and redirected by the reflector towards the detector.

15. Use of an instrument cluster arrangement in accordance with any one of the claims 1 - 12, for providing information regarding the subject to a subject-monitoring application, preferably an eye-detection and/or head tracking application.

## Patentansprüche

1. Instrumentenclusteranordnung, die zur Montage in einem Armaturenbrett eines Fahrzeugs vorgesehen ist, umfassend:
ein Display (4) mit einer Displayoberfläche (5), die zu einer Zielperson im Inneren des Fahrzeugs weisen soll, wenn der Instrumentencluster in dem Armaturenbrett angeordnet ist, und welches der Instrumentenclusteranordnung einen Grafikbereich bereitstellt, und **gekennzeichnet ist durch** einen Detektor (6), um die Zielperson im Inneren des Fahrzeugs zu überwachen, wobei der Detektor so angeordnet ist, dass er Strahlung empfängt, die Informationen zu der Zielperson bereitstellt, und
einen Reflektor (7), der angeordnet ist, um Strahlung von der Zielperson zu dem Detektor hin umzulenken,
wobei sowohl der Detektor als auch der Reflektor in der Instrumentenclusteranordnung neben dem Display angeordnet sind.

2. Instrumentenclusteranordnung nach Anspruch 1, wobei der Detektor eine optische Achse aufweist und der Detektor so angeordnet ist, dass die optische Achse einen Winkel mit der Displayoberfläche bildet, welcher im Bereich von -10 bis 30 Grad, vorzugsweise -10 bis 15 Grad, am meisten bevorzugt -10 bis 10 Grad liegt.

3. Instrumentenclusteranordnung nach Anspruch 1 oder 2, wobei der Detektor so angeordnet ist, dass die optische Achse im Wesentlichen parallel zu der Displayoberfläche ist.

4. Instrumentenclusteranordnung nach einem der vorhergehenden Ansprüche, wobei der Reflektor zwischen dem Detektor und der Displayoberfläche angeordnet ist.

5. Instrumentenclusteranordnung nach einem der vorhergehenden Ansprüche, wobei sich das Display zwischen einer oberen Kante und einer unteren Kante erstreckt, gesehen durch eine Zielperson in dem Fahrzeug, und der Reflektor und der Detektor neben der unteren Kante des Displays angeordnet sind.

6. Instrumentenclusteranordnung nach einem der vorhergehenden Ansprüche, wobei der Reflektor so angeordnet ist, dass er sich über einen Randbereich der Displayoberfläche erstreckt, wobei der Randbereich vorzugsweise weniger als 10 %, vorzugsweise weniger als 5 % des Gesamtbereichs der Displayoberfläche stellt.

7. Instrumentenclusteranordnung nach einem der vorhergehenden Ansprüche, wobei sich der Reflektor von einem Basisende, das neben dem Displaybereich angeordnet ist, zu einem freien Ende gegenüber dem Basisende erstreckt, wobei das freie Ende eine Endoberfläche aufweist, die einen Winkel von annähernd 90 Grad zu der Displayoberfläche bildet.

8. Instrumentenclusteranordnung nach einem der vorhergehenden Ansprüche, wobei der Reflektor für sichtbares Licht transparent ist und für die Strahlung reflektierend ist, wobei der Reflektor vorzugsweise ein dichroitischer Reflektor ist.

9. Instrumentenclusteranordnung nach einem der vorhergehenden Ansprüche, ferner umfassend mindestens einen Strahlungssender, der neben dem Display angeordnet ist, um Strahlung zu der Zielperson hin zu senden, wobei vorzugsweise zwei Strahlungssender angeordnet sind und am meisten bevorzugt zwei Strahlungssender auf gegenüberliegenden Seiten des Detektors angeordnet sind.

10. Instrumentenclusteranordnung nach Anspruch 9, wobei der mindestens eine Strahlungssender so angeordnet ist, dass er Strahlung in eine Richtung zu dem Reflektor hin sendet, so dass der Reflektor die Strahlung zu der Zielperson hin umlenkt.

11. Instrumentenclusteranordnung nach einem der vorhergehenden Ansprüche, wobei der Instrumentencluster mit einer Schnittstelle zum Senden von Signalen und/oder zum Bereitstellen von Spannung ausgestattet ist, wobei die Schnittstelle sowohl mit dem Display als auch mit dem Detektor verbunden ist.

12. Instrumentenclusteranordnung nach einem der vorhergehenden Ansprüche, wobei das Display ein erstes einheitliches Modul bildet und der Detektor und der Reflektor ein zweites einheitliches Modul bilden, um in einem Armaturenbrett eines Fahrzeugs montiert zu werden, wobei das erste und das zweite einheitliche Modul vorzugsweise vor der Montage in dem Armaturenbrett verbindbar sind, um so die Montage der Instrumentenclusteranordnung in der Armaturentafel als eine zusammengefügte Einheit zu ermöglichen.

13. Fahrzeug mit einem Armaturenbrett, das eine Instrumentenclusteranordnung gemäß einem der Ansprüche 1 bis 12 umfasst.

14. Verfahren zum Montieren einer Instrumentenclusteranordnung gemäß einem der Ansprüche 1 bis 12, umfassend Montieren der Instrumentenclusteranordnung in dem Armaturenbrett in einer Position, so dass Strahlung, die Informationen zu der Zielperson in dem Fahrzeug bereitstellt, von der Zielperson zu dem Reflektor gelenkt und durch den Reflektor zu dem Detektor hin umgelenkt werden kann.

15. Verwendung einer Instrumentenclusteranordnung gemäß einem der Ansprüche 1 bis 12 zum Bereitstellen von Informationen über die Zielperson an eine Zielpersonüberwachungsanwendung, vorzugsweise eine Augenerkennungs- und/oder Kopfverfolgungsanwendung.

## Revendications

1. Agencement de groupe d'instruments étant adapté pour être monté dans un panneau de tableau de bord d'un véhicule, comprenant
un affichage (4) ayant une surface d'affichage (5) destinée à faire face à un sujet à l'intérieur du véhicule lorsque le groupe d'instruments est agencé dans ledit panneau de tableau de bord et fournissant une zone graphique de l'agencement de groupe d'instruments, et **caractérisé par**
un détecteur (6) pour surveiller ledit objet à l'intérieur du véhicule, ledit détecteur étant agencé pour recevoir un rayonnement fournissant des informations concernant le sujet et un réflecteur (7) agencé pour rediriger le rayonnement provenant dudit sujet vers ledit détecteur, où le détecteur et le réflecteur sont tous les deux disposés dans ledit agencement de groupe d'instruments, de manière adjacente à l'affichage.

2. Agencement de groupe d'instruments selon la revendication 1, dans lequel le détecteur a un axe optique, et ledit détecteur est disposé avec ledit axe optique formant un angle avec ladite surface d'affichage se situant dans la plage s'étendant de -10 à 30 degrés, de préférence de -10 à 15 degrés, et dans le cas préféré de -10 à 10 degrés.

3. Agencement de groupe d'instruments selon la revendication 1 ou la revendication 2, dans lequel ledit détecteur est disposé avec ledit axe optique étant essentiellement parallèle à ladite surface d'affichage.

4. Agencement de groupe d'instruments selon l'une quelconque des revendications précédentes, dans lequel ledit réflecteur est disposé entre le détecteur et la surface d'affichage.

5. Agencement de groupe d'instruments selon l'une quelconque des revendications précédentes, dans lequel ledit affichage s'étend entre un bord supérieur et un bord inférieur, du point de vue d'un sujet dans le véhicule, et ledit réflecteur et ledit détecteur sont disposés de manière adjacente au bord inférieur de l'affichage.

6. Agencement de groupe d'instruments selon l'une quelconque des revendications précédentes, dans lequel ledit réflecteur est disposé de manière à s'étendre sur une zone de marge de la surface d'affichage, de préférence ladite zone de marge constitue moins de 10 %, de préférence moins de 5 %, de la superficie totale de la surface d'affichage.

7. Agencement de groupe d'instruments selon l'une quelconque des revendications précédentes, dans lequel le réflecteur étend depuis une extrémité de base étant disposée de manière adjacente à ladite zone d'affichage, et une extrémité libre opposée à ladite extrémité de base, ladite extrémité libre ayant une surface d'extrémité formant un angle d'environ 90 degrés par rapport à la surface d'affichage.

8. Agencement de groupe d'instruments selon l'une quelconque des revendications précédentes, dans lequel ledit réflecteur est transparent à la lumière visible et réfléchissant pour ledit rayonnement, de préférence ledit réflecteur est un réflecteur dichroïque.

9. Agencement de groupe d'instruments selon l'une quelconque des revendications précédentes, comprenant en outre au moins un émetteur de rayonnement étant disposé de manière adjacente audit affichage, pour émettre un rayonnement vers l'objet, de préférence deux émetteurs de rayonnement sont disposés, dans le cas préféré, deux émetteurs de rayonnement sont disposés sur des côtés opposés du détecteur.

10. Agencement de groupe d'instruments selon la revendication 9, dans lequel ledit au moins un émetteur de rayonnement est agencé pour émettre un rayonnement dans une direction vers le réflecteur, de manière à ce que le réflecteur redirige le rayonnement vers le sujet.

11. Agencement de groupe d'instruments selon l'une quelconque des revendications précédentes, dans lequel ledit groupe d'instruments est pourvu d'une interface pour transmettre des signaux et/ou pour délivrer une tension, où ladite interface est connectée à la fois à l'affichage et au détecteur.

12. Agencement de groupe d'instruments selon l'une quelconque des revendications précédentes, dans lequel ledit affichage forme un premier module unitaire, et ledit détecteur et le réflecteur forment un second module unitaire, pour un montage dans un panneau de tableau de bord d'un véhicule, lesdits premier et second modules unitaires pouvant de préférence être connectés avant le montage dans ledit panneau de tableau de bord, de manière à permettre le montage de l'agencement de groupe d'instruments dans le tableau de bord sous la forme d'une unité assemblée.

13. Véhicule comportant un panneau de tableau de bord comprenant un agencement de groupe d'instruments selon l'une quelconque des revendications 1 à 12.

14. Procédé de montage d'un agencement de groupe d'instruments selon l'une quelconque des revendications 1 à 12, comprenant de monter ledit agencement de groupe d'instruments dans le panneau de tableau de bord à un emplacement tel qu'un rayonnement fournissant des informations concernant le sujet dans le véhicule puisse être dirigé du sujet vers le réflecteur, et redirigé par le réflecteur vers le détecteur.

15. Utilisation d'un agencement de groupe d'instruments selon l'une quelconque des revendications 1 à 12 pour fournir des informations concernant le sujet à une application de surveillance du sujet, de préférence une application de détection d'oeil et/ou une application de suivi de tête.
